# EUROPÄISCHE PATENTSCHRIFT

(11) **EP 3 219 917 B1**
(45) Veröffentlichungstag und Bekanntmachung des Hinweises auf die Patenterteilung: **27.01.2021**
(21) Anmeldenummer: 17160798.9
(22) Anmeldetag: 14.03.2017
(51) Int. Cl.: F01D 5/16, F01D 5/26, F04D 29/66, F16F 7/10

(54) **TURBOMASCHINENSCHAUFELANORDNUNG, ZUGEHÖRIGE TURBOMASCHINE UND HERSTELLUNGSVERFAHREN**
TURBOMACHINE BLADE ASSEMBLY, CORRESPONDING TURBOMASCHINE AND MANUFACTURING METHOD
AGENCEMENT D'AUBES DE TURBOMACHINE, TURBOMACHINE ET PROCÉDÉ DE FABRICATION ASSOCIÉS

(30) Priorität: 16.03.2016 DE 102016204281
(43) Veröffentlichungstag der Anmeldung: 20.09.2017
(73) Patentinhaber: MTU Aero Engines AG, 80995 München (DE)
(72) Erfinder: Schlemmer, Markus, 84048 Mainburg / Sandelzhausen (DE); Rösele, Gerhard-Heinz, 86551 Aichach (DE); Hartung, Andreas, 81829 München (DE)

(56) Entgegenhaltungen:
- WO-A1-2012/095067

## Beschreibung

Die vorliegende Erfindung betrifft eine Turbomaschinenschaufelanordnung, eine Turbomaschine, insbesondere Gasturbine, mit der Turbomaschinenschaufelanordnung sowie ein Verfahren zum Herstellen der Turbomaschinenschaufelanordnung.

Aus der eigenen WO 2012/095067 A1, auf die ergänzend Bezug genommen wird, ist eine Turbomaschinenschaufelanordnung mit einer Turbomaschinenschaufel und einem mehrteiligen zylinderförmigen Stimmkörperführungsgehäuse mit mehreren Hohlräumen bekannt, in denen jeweils ein Stimmkörper, der zum Stoßkontakt mit dem Stimmkörperführungsgehäuse vorgesehen ist, aufgenommen ist, wobei das Stimmkörperführungsgehäuse in einer Aussparung der Turbomaschinenschaufel angeordnet ist.

Eine Aufgabe einer Ausführung der vorliegenden Erfindung ist es, eine Turbomaschine zu verbessern.

Diese Aufgabe wird durch eine Turbomaschinenschaufelanordnung mit den Merkmalen des Anspruchs 1 gelöst. Ansprüche 10, 11 stellen eine Turbomaschine mit einer hier beschriebenen Turbomaschinenschaufelanordnung bzw. ein Verfahren zum Herstellen einer hier beschriebenen Turbomaschinenschaufelanordnung unter Schutz. Vorteilhafte Ausführungsformen der Erfindung sind Gegenstand der Unteransprüche. Nach einer Ausführung der vorliegenden Erfindung weist eine Turbomaschinenschaufelanordnung eine Turbomaschinenschaufel und einen oder mehrere Stimmkörperbehälter auf. Die Turbomaschinenschaufel kann insbesondere eine Lauf- oder Leitschaufel einer Verdichter- oder Turbinenstufe einer Gasturbine sein. Insbesondere hierbei kann die vorliegende Erfindung vorteilhaft verwendet werden.

Der Stimmkörperbehälter weist in einer Ausführung ein Gehäuse auf, das, insbesondere form-, reib- und/oder stoffschlüssig, an der Turbomaschinenschaufel befestigt ist bzw. wird, insbesondere zerstörungsfrei lösbar oder nicht-zerstörungsfrei-lösbar und/oder insbesondere an einem Schaufelfuß, einer Schaufelspitze oder einem Schaufelblatt der Turbomaschinenschaufel. Insbesondere diese Befestigung und/oder Platzierung kann die Montage und/oder das Betriebsverhalten der Turbomaschine(nschaufel) vorteilhaft verbessern.

Der Stimmkörperbehälter weist in einer Ausführung der vorliegenden Erfindung einen Einsatz auf, der ganz oder teilweise in einer Aussparung dieses Gehäuses angeordnet bzw. aufgenommen ist bzw. wird. Hierdurch kann insbesondere die Abstützung und/oder Befestigung des Einsatzes und/oder ein Stoßverhalten und somit das Betriebsverhalten der Turbomaschine(nschaufel) vorteilhaft verbessert werden. In einer Weiterbildung können hierdurch auch Scherkräfte in einer oder mehreren Schweißnähten des Stimmkörperbehälters reduziert werden.

Nach einer Ausführung der vorliegenden Erfindung sind bzw. werden zwei Hohlräume, in denen jeweils wenigstens ein Stimmkörper aufgenommen ist, der zum Stoßkontakt mit dem Gehäuse und dem Einsatz vorgesehen ist bzw. diese wiederholt kontaktieren kann, und die nachfolgend ohne Beschränkung der Allgemeinheit als erste Hohlräume bezeichnet werden, durch eine Wand des Einsatzes voneinander beabstandet bzw. getrennt. Mit anderen Worten ist in einer Ausführung die Wand des Einsatzes zwischen den beiden ersten Hohlräumen angeordnet, so dass eine Seite bzw. Oberfläche der Wand eine Wandfläche des einen ersten Hohlraums und eine gegenüberliegende Seite bzw. Oberfläche der Wand eine Wandfläche des anderen ersten Hohlraums bildet bzw. definiert. Der Einsatz kann in einer Ausführung aus dieser, insbesondere ebenen, Wand bestehen oder weitere Wände, Stege oder dergleichen aufweisen.

Es hat sich überraschend herausgestellt, dass ein Stoßverhalten der in den Hohlräumen angeordneten Stimmkörper und somit das Betriebsverhalten der Turbomaschine(nschaufel) vorteilhaft verbessert werden kann, indem zwei Hohlräume durch (gegenüberliegende Seiten bzw. Oberflächen) eine(r) Wand des Einsatzes getrennt bzw. teilweise gebildet bzw. definiert werden, der in der Aussparung des an der Turbomaschinenschaufel angeordneten Gehäuses angeordnet ist.

Der Stimmkörperbehälter weist in einer Ausführung zwei weitere Hohlräume auf, in denen jeweils wenigstens ein Stimmkörper aufgenommen ist, der zum Stoßkontakt mit dem Gehäuse und dem Einsatz vorgesehen ist bzw. diese wiederholt kontaktieren kann, die nachfolgend ohne Beschränkung der Allgemeinheit als zweite Hohlräume bezeichnet werden, und die ebenfalls durch eine, insbesondere dieselbe, Wand des Einsatzes voneinander beabstandet bzw. getrennt sind bzw. werden. Mit anderen Worten ist in einer Ausführung diese Wand des Einsatzes zwischen den beiden zweiten Hohlräumen angeordnet, so dass eine Seite bzw. Oberfläche der Wand eine Wandfläche des einen zweiten Hohlraums und eine gegenüberliegende Seite bzw. Oberfläche der Wand eine Wandfläche des anderen zweiten Hohlraums bildet bzw. definiert.

In einer Ausführung kann der Stimmkörperbehälter noch weitere Hohlräume aufweisen, in denen jeweils wenigstens ein Stimmkörper aufgenommen ist, der zum Stoßkontakt mit dem Gehäuse und dem Einsatz vorgesehen ist bzw. diese wiederholt kontaktieren kann, und die ebenfalls durch eine, insbesondere dieselbe, Wand des Einsatzes voneinander beabstandet bzw. getrennt sind bzw. werden. Mit anderen Worten ist in einer Ausführung diese Wand des Einsatzes zwischen jeweils zwei weiteren Hohlräumen angeordnet, so dass eine Seite bzw. Oberfläche der Wand eine Wandfläche des einen weiteren Hohlraums und eine gegenüberliegende Seite bzw. Oberfläche der Wand eine Wandfläche des anderen weiteren Hohlraums bildet bzw. definiert.

In einer Ausführung sind bzw. werden in einem oder mehreren der Hohlräume jeweils genau bzw. nur ein Stimmkörper angeordnet. Hierdurch kann ein Stoßverhalten und somit das Betriebsverhalten der Turbomaschine(nschaufel) vorteilhaft verbessert werden.

Durch die in den Hohlräumen angeordneten und zum Stoßkontakt mit dem Gehäuse und dem Einsatz vorgesehenen bzw. ausgebildeten Stimmkörper kann ein Schwingungsverhalten und somit das Betriebsverhalten der Turbomaschine(nschaufel) vorteilhaft verbessert, insbesondere eine oder mehrere Eigenfrequenzen verstimmt, werden. Hierzu sowie zu weiteren Einzelheiten dieses Konzepts wird ergänzend auf die WO 2012/095067 A1 Bezug genommen.

Ein oder mehrere der Stimmkörper weisen in einer Ausführung jeweils eine kugelförmige Kontur und/oder jeweils eine Masse auf, die wenigstens 0,01 g und/oder höchstens 0,075 g beträgt. Zusätzlich oder alternativ beträgt in einer Ausführung ein minimales Bewegungsspiel eines oder mehrerer der Stimmkörper in dem ihn aufnehmenden Hohlraum jeweils wenigstens 0,01 mm, insbesondere wenigstens 0,1 mm, und/oder ein maximales Bewegungsspiel eines oder mehrerer der Stimmkörper in dem ihn aufnehmenden Hohlraum jeweils höchstens 1,5 mm, insbesondere höchstens 1,2 mm. Hierdurch kann ein Stoßverhalten und somit das Betriebsverhalten der Turbomaschine(nschaufel) vorteilhaft verbessert werden.

Das Gehäuse, der Einsatz und/oder ein oder mehrere der Stimmkörper können in einer Ausführung Metall aufweisen, insbesondere daraus bestehen. Hierdurch kann ein Stoßverhalten und somit das Betriebsverhalten der Turbomaschine(nschaufel) vorteilhaft verbessert werden.

In einer Ausführung sind bzw. werden wenigstens einer der ersten und einer der zweiten Hohlräume durch eine Wand des Einsatzes voneinander beabstandet bzw. getrennt. Zusätzlich oder alternativ können in einer Ausführung wenigstens einer der ersten und einer der zweiten Hohlräume durch eine Wand des Gehäuses voneinander beabstandet bzw. getrennt sein bzw. werden. Hierdurch kann ein Stoßverhalten und somit das Betriebsverhalten der Turbomaschine(nschaufel) jeweils vorteilhaft verbessert werden.

In einer Ausführung besteht das, insbesondere symmetrisch geformte bzw. ausgebildete, Gehäuse aus einem Teil bzw. ist einteilig ausgebildet. Hierdurch kann insbesondere die Stabilität erhöht und so ein Stoßverhalten und somit das Betriebsverhalten der Turbomaschine(nschaufel) vorteilhaft verbessert werden.

In einer anderen Ausführung besteht das, insbesondere symmetrisch geformte bzw. ausgebildete, Gehäuse aus zwei oder mehr, insbesondere baugleichen, Teilen bzw. ist zwei- bzw. mehrteilig ausgebildet. Hierdurch kann insbesondere die Montage vorteilhaft verbessert werden.

In einer Ausführung besteht der, insbesondere symmetrisch geformte bzw. ausgebildete, Einsatz aus einem Teil bzw. ist einteilig ausgebildet. Hierdurch kann insbesondere die Stabilität erhöht und so ein Stoßverhalten und somit das Betriebsverhalten der Turbomaschine(nschaufel) vorteilhaft verbessert werden.

In einer Ausführung sind bzw. werden wenigstens zwei Teile des Gehäuses stoffschlüssig miteinander verbunden, insbesondere verschweißt. Hierdurch kann insbesondere die Stabilität erhöht und so ein Stoßverhalten und somit das Betriebsverhalten der Turbomaschine(nschaufel) vorteilhaft verbessert werden. Zusätzlich oder alternativ können in einer Ausführung, insbesondere durch die Anordnung bzw. Aufnahme des Einsatzes in der Aussparung des Gehäuses, Scherkräfte in einer oder mehreren Schweißnähten des Stimmkörperbehälters reduziert werden.

Zusätzlich oder alternativ sind bzw. werden in einer Ausführung Gehäuse und Einsatz stoffschlüssig miteinander verbunden, insbesondere verschweißt. Hierdurch kann insbesondere die Stabilität erhöht und so ein Stoßverhalten und somit das Betriebsverhalten der Turbomaschine(nschaufel) vorteilhaft verbessert werden. Zusätzlich oder alternativ können in einer Ausführung, insbesondere durch die Anordnung bzw. Aufnahme des Einsatzes in der Aussparung des Gehäuses, Scherkräfte in einer oder mehreren Schweißnähten des Stimmkörperbehälters reduziert werden.

Insbesondere können die wenigstens zwei Teile des Gehäuses und/oder Gehäuse und Einsatz derart stoffschlüssig miteinander verbunden sein bzw. werden, dass die Hohlräume gasdicht gegen eine Außenumgebung des Gehäuses abgedichtet sind bzw. werden, insbesondere also die wenigstens zwei Teile des Gehäuses und/oder Gehäuse und Einsatz gasdicht miteinander. Hierdurch kann ein Stoßverhalten und somit das Betriebsverhalten der Turbomaschine(nschaufel) vorteilhaft verbessert werden.

In einer Ausführung sind bzw. werden Stirnseiten von zwei Teilen des Gehäuses miteinander verbunden, wobei eine der Stirnseiten oder beide Stirnseiten (jeweils) eine Vertiefung aufweisen, in der der Einsatz ganz oder teilweise aufgenommen ist bzw. wird, und die somit die Aussparung definiert bzw. definieren. Hierdurch kann insbesondere die Stabilität erhöht und so ein Stoßverhalten und somit das Betriebsverhalten der Turbomaschine(nschaufel) vorteilhaft verbessert werden.

In einer Ausführung weist das Gehäuse eine einseitig offene bzw. sacklochartige Aussparung oder eine zweiseitig offene Aussparung bzw. Durchgangsbohrung auf, in die der Einsatz eingeführt ist bzw. wird. Hierdurch kann insbesondere die Stabilität erhöht und so ein Stoßverhalten und somit das Betriebsverhalten der Turbomaschine(nschaufel) vorteilhaft verbessert werden. Zusätzlich oder alternativ kann hierdurch die Montage vorteilhaft verbessert werden.

In einer Ausführung weist das Gehäuse eine oder mehrere einseitig offene bzw. sacklochartige Aussparungen und/oder eine oder mehrere zweiseitig offene Aussparungen bzw. Durchgangsbohrungen auf, die jeweils einen der Hohlräume begrenzen. Zusätzlich oder alternativ weist in einer Ausführung der Einsatz eine oder mehrere einseitig offene bzw. sacklochartige Aussparungen und/oder eine oder mehrere zweiseitig offene Aussparungen bzw. Durchgangsbohrungen auf, die jeweils einen der Hohlräume begrenzen. Hierdurch kann insbesondere ein Stoßverhalten und somit das Betriebsverhalten der Turbomaschine(nschaufel) vorteilhaft verbessert werden. Zusätzlich oder alternativ kann hierdurch die Montage vorteilhaft verbessert werden.

In einer Ausführung ist das Gehäuse quaderförmig. Hierdurch kann insbesondere ein Stoßverhalten und somit das Betriebsverhalten der Turbomaschine(nschaufel) vorteilhaft verbessert werden.

In einer Ausführung weisen Durchgangsbohrungen des Einsatzes jeweils einen geschlossenen Umfang bzw. Querschnitt oder einen Schlitz auf. Hierdurch kann Gewicht eingespart und/oder ein vorteilhaftes Stoßverhalten der Stimmkörper in den Hohlräumen erreicht werden.

Zum Herstellen einer hier beschriebenen Turbomaschinenschaufelanordnung werden nach einer Ausführung der vorliegenden Erfindung die Stimmkörper in den Hohlräumen angeordnet, insbesondere in Teilen des Gehäuses oder in dem Einsatz. Vorab oder anschließend wird der Einsatz in der Aussparung des Gehäuses angeordnet. In einer Weiterbildung wird anschließend der Einsatz mit dem Gehäuse und/oder Teile des Gehäuses miteinander verbunden, so dass der Einsatz in dem Gehäuse fixiert ist bzw. wird.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Turbomaschinenschaufelanordnung nach einer Ausführung der vorliegenden Erfindung in perspektivischer Ansicht;
- Fig. 2: einen Schnitt parallel zur Bildebene der Fig. 1 bzw. längs der Linie II-II in Fig. 3 durch einen Stimmkörperbehälter der Turbomaschinenschaufelanordnung;
- Fig. 3: einen Schnitt längs der Linie III-III in Fig. 2 durch den Stimmkörperbehälter;
- Fig. 4: einen Fig. 2 entsprechenden Schnitt durch einen Stimmkörperbehälter einer Turbomaschinenschaufelanordnung nach einer weiteren Ausführung der vorliegenden Erfindung;
- Fig. 5: einen Fig. 3 entsprechenden Schnitt durch den Stimmkörperbehälter der Fig. 4;
- Fig. 6: einen Fig. 2, 4 entsprechenden Schnitt durch einen Stimmkörperbehälter einer Turbomaschinenschaufelanordnung nach einer weiteren Ausführung der vorliegenden Erfindung; und
- Fig. 7: einen Fig. 3, 5 entsprechenden Schnitt durch den Stimmkörperbehälter der Fig. 6.

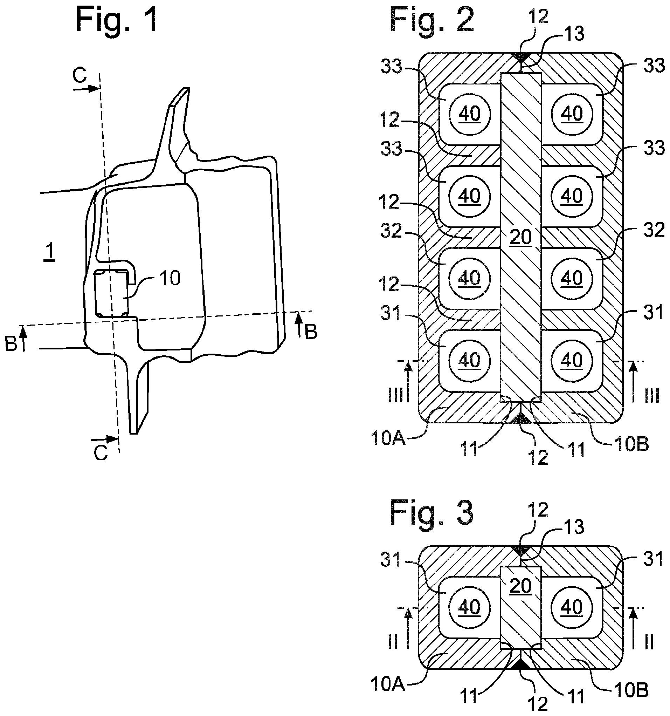

Fig. 1 zeigt in perspektivischer Ansicht einen schaufelfußseitigen Teil einer Turbomaschinenschaufelanordnung nach einer Ausführung der vorliegenden Erfindung, die eine in Fig.1 nur teilweise gezeigte Turbomaschinenschaufel 1 und einen Stimmkörperbehälter aufweist, der in Fig. 2 in einem Schnitt parallel zur Bildebene der Fig. 1 und in Fig. 3 in einem hierzu senkrechten Schnitt längs der Linie III-III in Fig. 2 gezeigt ist.

Der Stimmkörperbehälter weist ein an der Turbomaschinenschaufel 1 befestigtes Gehäuse 10, das aus zwei baugleichen Teilen 10A, 10B besteht, und einen Einsatz 20 auf, der in einer Aussparung 11 dieses Gehäuses angeordnet ist, wobei zwei erste Hohlräume 31, in denen jeweils ein Stimmkörper 40 aufgenommen ist, der zum Stoßkontakt mit dem Gehäuse 10 und dem Einsatz 20 vorgesehen ist, durch den Einsatz voneinander beabstandet sind, der im Ausführungsbeispiel der Fig. 2, 3 aus einer ebenen Wand 20 besteht.

Der Stimmkörperbehälter weist zwei zweite Hohlräume 32 sowie weitere Hohlräume 33 auf, in denen ebenfalls jeweils ein Stimmkörper 40 aufgenommen ist, der zum Stoßkontakt mit dem Gehäuse 10 und dem Einsatz 20 vorgesehen ist, wobei die zwei zweiten Hohlräume 32 sowie jeweils zwei der weiteren Hohlräume 33 jeweils durch den Einsatz bzw. die Wand 20 voneinander beabstandet sind.

Wie in Fig. 2 erkennbar, sind jeweils einer der ersten und einer der zweiten Hohlräume 31, 32, jeweils einer der zweiten und einer der weiteren Hohlräume 32, 33 und jeweils zwei der weiteren Hohlräume 33 durch eine Wand 20 des Gehäuses 10 voneinander beabstandet.

Stirnseiten 13 der zwei Teile 10A, 10B des Gehäuses 10 sind durch eine umlaufende Schweißnaht 12 gasdicht miteinander verbunden, wobei beide Stirnseiten 13 jeweils eine Vertiefung 11 aufweisen, in der der Einsatz 20 teilweise aufgenommen ist und die somit zusammen die Aussparung 11 bilden.

Das Gehäuse 10 weist einseitig offene Sacklochbohrungen auf, die jeweils einen der Hohlräume 31-33 begrenzen bzw. zusammen mit dem Einsatz bzw. der Wand 20 definieren.

Das Gehäuse 10 ist quaderförmig.

Zum Herstellen der Turbomaschinenschaufelanordnung werden zunächst die Stimmkörper 40 in den Sacklochbohrungen in den Teilen 10A, 10B des Gehäuses und anschließend der Einsatz 20 in der Aussparung 11 angeordnet und anschließend die beiden Teilen 10A, 10B miteinander verschweißt.

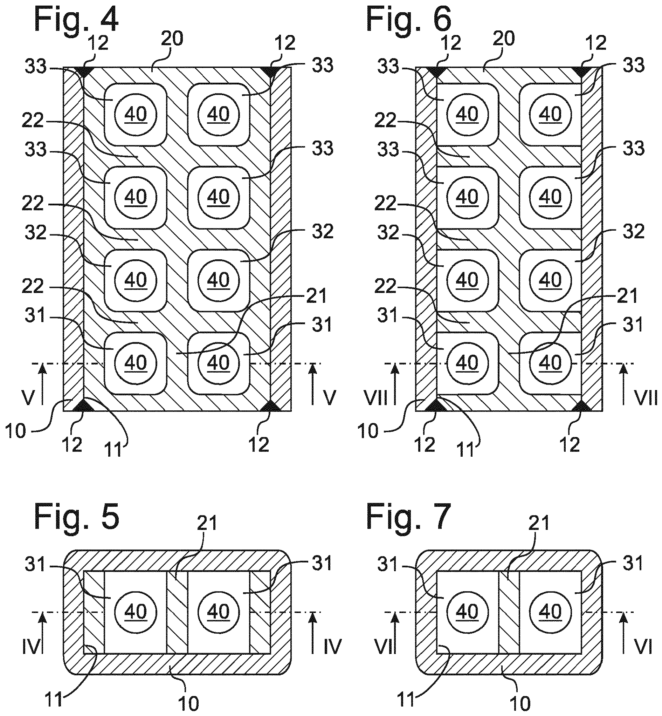

Fig. 4, 5 zeigen in Fig. 2, 3 entsprechenden Schnitten durch einen Stimmkörperbehälter einer Turbomaschinenschaufelanordnung nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 4, 5 ist der Einsatz 20 in eine zweiseitig offene Aussparung 11 des einteiligen Gehäuses 10 eingeschoben und an seinen beiden Stirnseiten (oben, unten in Fig. 4) mit diesem jeweils durch eine umlaufende Schweißnaht 12 gasdicht verschweißt.

Wie in Fig. 4 erkennbar, sind in dieser Ausführung jeweils einer der ersten und einer der zweiten Hohlräume 31, 32, jeweils einer der zweiten und einer der weiteren Hohlräume 32, 33 und jeweils zwei der weiteren Hohlräume 33 durch eine Wand 22 des Einsatzes 20 voneinander beabstandet, die beiden ersten Hohlräume 31, die beiden zweiten Hohlräume 32 und jeweils zwei der weiteren Hohlräume 33 durch eine hierzu senkrechte Wand 21 des Einsatzes 20.

Der Einsatz 20 weist zweiseitig (oben, unten in Fig. 5) offene Durchgangsbohrungen auf, die jeweils einen der Hohlräume 31-33 begrenzen bzw. zusammen mit dem Gehäuse 10 definieren.

Zum Herstellen der Turbomaschinenschaufelanordnung der Ausführung der Fig. 4, 5 werden die Stimmkörper 40 in den Durchgangsbohrungen des Einsatzes 20 und anschließend der Einsatz 20 in der Aussparung 11 des Gehäuses 10 angeordnet und mit diesem verschweißt.

Fig. 6, 7 zeigen in Fig. 4, 5 entsprechenden Schnitten durch einen Stimmkörperbehälter einer Turbomaschinenschaufelanordnung nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

In der Ausführung der Fig. 6, 7 weisen die Durchgangsbohrungen des Einsatzes 20 im Gegensatz zur Ausführung der Fig. 4, 5 keinen geschlossenen Umfang bzw. Querschnitt, sondern jeweils einen Schlitz (rechts, links in Fig. 6, 7) auf, der ebenso wie die einander gegenüberliegenden stirnseitigen Öffnungen (oben, unten in Fig. 5 bzw. 7) durch das Gehäuse 10 abgedeckt bzw. verschlossen ist. Hierdurch kann Gewicht eingespart und/oder ein anderes Stoßverhalten der Stimmkörper 40 in den Hohlräumen 31 - 33 erreicht werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Turbomaschinenschaufel
- 10: Gehäuse
- 10A, 10B: Gehäuseteil
- 11: Aussparung/Vertiefung
- 12: Schweißnaht
- 13: Stirnseite
- 20: Einsatz
- 21, 22: Wand
- 31: erster Hohlraum
- 32: zweiter Hohlraum
- 33: weiterer Hohlraum
- 40: Stimmkörper

## Patentansprüche

1. Turbomaschinenschaufelanordnung mit einer Turbomaschinenschaufel (1), insbesondere für eine Gasturbine, und wenigstens einem Stimmkörperbehälter mit einem an der Turbomaschinenschaufel befestigten Gehäuse (10) und einem Einsatz (20), wobei zwei erste Hohlräume (31), in denen jeweils wenigstens ein Stimmkörper (40) aufgenommen ist, der zum Stoßkontakt mit dem Gehäuse (10) und dem Einsatz (20) vorgesehen ist, durch eine Wand (20; 21) des Einsatzes voneinander beabstandet sind, **dadurch gekennzeichnet, dass** der Einsatz (20) in einer Aussparung (11) dieses Gehäuses angeordnet ist.

2. Turbomaschinenschaufelanordnung nach dem vorhergehenden Anspruch, **dadurch gekennzeichnet, dass** zwei zweite Hohlräume (32), in denen jeweils wenigstens ein Stimmkörper (40) aufgenommen ist, der zum Stoßkontakt mit dem Gehäuse (10) und dem Einsatz (20) vorgesehen ist, durch eine Wand (20; 21) des Einsatzes voneinander beabstandet sind.

3. Turbomaschinenschaufelanordnung nach dem vorhergehenden Anspruch, **dadurch gekennzeichnet, dass** wenigstens einer der ersten und einer der zweiten Hohlräume (31, 32) durch eine Wand (12; 22) des Einsatzes oder des Gehäuses voneinander beabstandet sind.

4. Turbomaschinenschaufelanordnung nach einem der vorhergehenden Ansprüche, **dadurch gekennzeichnet, dass** das, insbesondere symmetrische, Gehäuse (10) aus einem Teil oder aus zwei oder mehr, insbesondere baugleichen, Teilen (10A, 10B) besteht und/oder der, insbesondere symmetrische, Einsatz (20) aus einem Teil besteht.

5. Turbomaschinenschaufelanordnung nach einem der vorhergehenden Ansprüche, **dadurch gekennzeichnet, dass** wenigstens zwei Teile (10A, 10B) des Gehäuses und/oder Gehäuse (10) und Einsatz (20) stoffschlüssig miteinander verbunden, insbesondere verschweißt (12) sind.

6. Turbomaschinenschaufelanordnung nach einem der vorhergehenden Ansprüche, **dadurch gekennzeichnet, dass** Stirnseiten (13) von zwei Teilen (10A, 10B) des Gehäuses (10) miteinander verbunden sind, wobei wenigstens eine der Stirnseiten eine Vertiefung (11) aufweist, in der der Einsatz (20) wenigstens teilweise aufgenommen ist.

7. Turbomaschinenschaufelanordnung nach einem der vorhergehenden Ansprüche, **dadurch gekennzeichnet, dass** das Gehäuse (10) eine ein- oder zweiseitig offene Aussparung (11) aufweist, in die der Einsatz (20) eingeführt ist.

8. Turbomaschinenschaufelanordnung nach einem der vorhergehenden Ansprüche, **dadurch gekennzeichnet, dass** das Gehäuse (10) und/oder der Einsatz (20) wenigstens eine ein- oder zweiseitig offene Aussparung aufweisen, die einen der Hohlräume (31 - 33) begrenzt.

9. Turbomaschinenschaufelanordnung nach einem der vorhergehenden Ansprüche, **dadurch gekennzeichnet, dass** das Gehäuse (10) quaderförmig ist.

10. Turbomaschine, insbesondere Gasturbine, mit wenigstens einer Turbomaschinenschaufelanordnung nach einem der vorhergehenden Ansprüche.

11. Verfahren zum Herstellen einer Turbomaschinenschaufelanordnung nach einem der Ansprüche 1 bis 9, wobei die Stimmkörper (40) in den Hohlräumen (31-33) und der Einsatz (20) in der Aussparung (11) des Gehäuses (10) angeordnet werden.

## Claims

1. Turbomachine blade assembly comprising a turbomachine blade (1), in particular for a gas turbine, and at least one tuning element container having a housing (10), which is fastened to the turbomachine blade, and an insert (20), two first cavities (31), in each of which at least one tuning element (40) is received which is provided for impact contact with the housing (10) and the insert (20), being spaced apart from one another by a wall (20; 21) of the insert, **characterized in that** the insert (20) is arranged in a recess (11) of this housing.

2. Turbomachine blade assembly according to the preceding claim, **characterized in that** two second cavities (32), in each of which at least one tuning element (40) is received which is provided for impact contact with the housing (10) and the insert (20), are spaced apart from one another by a wall (20; 21) of the insert.

3. Turbomachine blade assembly according to the preceding claim, **characterized in that** at least one of the first and one of the second cavities (31, 32) are spaced apart from one another by a wall (12; 22) of the insert or the housing.

4. Turbomachine blade assembly according to any of the preceding claims, **characterized in that** the in particular symmetrical housing (10) consists of one part or of two or more in particular structurally identical parts (10A, 10B) and/or the in particular symmetrical insert (20) consists of one part.

5. Turbomachine blade assembly according to any of the preceding claims, **characterized in that** at least two parts (10A, 10B) of the housing and/or housing (10) and insert (20) are materially bonded to one another, in particular welded (12).

6. Turbomachine blade assembly according to any of the preceding claims, **characterized in that** end faces (13) of two parts (10A, 10B) of the housing (10) are interconnected, at least one of the end faces comprising a depression (11) in which the insert (20) is at least partially received.

7. Turbomachine blade assembly according to any of the preceding claims, **characterized in that** the housing (10) comprises a recess (11) which is open on one or two sides and into which the insert (20) is inserted.

8. Turbomachine blade assembly according to any of the preceding claims, **characterized in that** the housing (10) and/orthe insert (20) comprises at least one recess which is open on one or two sides and delimits one of the cavities (31 -33).

9. Turbomachine blade assembly according to any of the preceding claims, **characterized in that** the housing (10) is cuboid.

10. Turbomachine, in particular a gas turbine, comprising at least one turbomachine blade assembly according to any of the preceding claims.

11. Method for producing a turbomachine blade assembly according to any of claims 1 to 9, the tuning elements (40) being arranged in the cavities (31-33) and the insert (20) being arranged in the recess (11) of the housing (10).

## Revendications

1. Agencement d'aube de turbomachine comportant une aube de turbomachine (1), en particulier destinée à une turbine à gaz, et au moins un contenant d'élément d'amortissement comportant un carter (10) fixé à l'aube de turbomachine et un insert (20), deux premières cavités (31), dans lesquelles est reçu respectivement au moins un élément d'amortissement (40) qui est prévu pour un contact d'impact avec le carter(10) et l'insert (20), étant espacées l'une de l'autre par une paroi (20 ; 21) de l'insert, **caractérisé en ce que** l'insert (20) est disposé dans un évidement (11) de ce carter.

2. Agencement d'aube de turbomachine selon la revendication précédente, **caractérisé en ce que** deux secondes cavités (32), dans lesquelles est reçu respectivement au moins un élément d'amortissement (40) qui est prévu pour un contact d'impact avec le carter(10) et l'insert (20), sont espacées l'une de l'autre par une paroi (20 ; 21) de l'insert.

3. Agencement d'aube de turbomachine selon la revendication précédente, **caractérisé en ce qu'**au moins une des première et une des secondes cavités (31, 32) sont espacées l'une de l'autre par une paroi (12 ; 22) de l'insert ou du carter.

4. Agencement d'aube de turbomachine selon l'une des revendications précédentes, **caractérisé en ce que** le carter (10), en particulier symétrique, est constitué d'une partie ou de deux ou de plusieurs parties (10A, 10B), en particulier structurellement identiques, et/ou que l'insert (20), en particulier symétrique, est constitué d'une partie.

5. Agencement d'aube de turbomachine selon l'une des revendications précédentes, **caractérisé en ce qu'**au moins deux parties (10A, 10B) du carter et/ou le carter (10) et l'insert (20) sont liés par liaison de matière, en particulier par soudage (12).

6. Agencement d'aube de turbomachine selon l'une des revendications précédentes, **caractérisé en ce que** les faces frontales (13) de deux parties (10A, 10B) du carter (10) sont reliées l'une à l'autre, au moins l'une des faces frontales présentant un abaissement (11) dans lequel l'insert (20) est reçu au moins partiellement.

7. Agencement d'aube de turbomachine selon l'une des revendications précédentes, **caractérisé en ce que** le carter (10) présente un évidement (11) ouvert sur un ou deux côtés et dans lequel est inséré l'insert (20).

8. Agencement d'aube de turbomachine selon l'une des revendications précédentes, **caractérisé en ce que** le carter (10) et/ou l'insert (20) présentent au moins un évidement ouvert sur un ou deux côtés et délimitant l'une des cavités (31-33).

9. Agencement d'aube de turbomachine selon l'une des revendications précédentes, **caractérisé en ce que** le carter (10) est cuboïde.

10. Turbomachine, en particulier turbine à gaz, comportant au moins un agencement d'aube de turbomachine selon l'une des revendications précédentes.

11. Procédé de fabrication d'un agencement d'aube de turbomachine selon l'une des revendications 1 à 9, les éléments d'amortissement (40) étant disposés dans les cavités (31-33) et l'insert (20) étant disposé dans l'évidement (11)du carter (10).
